# EUROPÄISCHE PATENTSCHRIFT

(11) **EP 1 904 736 B1**
(45) Veröffentlichungstag und Bekanntmachung des Hinweises auf die Patenterteilung: **19.09.2012**
(21) Anmeldenummer: 06777506.4
(22) Anmeldetag: 29.06.2006
(51) Int. Cl.: F02D 41/20, H01L 41/04

(54) **VORRICHTUNG ZUM LADEN UND ENTLADEN WENIGSTENS EINES PIEZOAKTORS FÜR EIN EINSPRITZVENTIL EINER BRENNKRAFTMASCHINE**
DEVICE FOR CHARGING AND DISCHARGING AT LEAST ONE PIEZOACTUATOR FOR AN INJECTION VALVE OF AN INTERNAL COMBUSTION ENGINE
DISPOSITIF POUR CHARGER ET DECHARGER AU MOINS UN PIEZO-ACTIONNEUR CONÇU POUR UNE SOUPAPE D'INJECTION D'UN MOTEUR A COMBUSTION INTERNE

(30) Priorität: 19.07.2005 DE 102005033708
(43) Veröffentlichungstag der Anmeldung: 02.04.2008
(73) Patentinhaber: Continental Automotive GmbH, 30165 Hannover (DE)
(72) Erfinder: GÖTZENBERGER, Martin, 85051 Ingolstadt (DE)
(86) Internationale Anmeldenummer: PCT/EP2006/063679
(87) Internationale Veröffentlichungsnummer: WO 2007/009862

(56) Entgegenhaltungen:
- EP-A- 1 139 443
- EP-A- 1 312 785
- DE-A1- 10 114 421
- DE-A1- 10 152 270
- DE-A1- 19 843 621
- DE-A1- 19 854 306
- DE-C1- 19 709 717

## Beschreibung

Die vorliegende Erfindung betrifft die Ansteuerung (Laden und Entladen) wenigstens eines Piezoaktors für ein Einspritzventil einer Brennkraftmaschine.

Derartige Vorrichtungen sind bekannt und umfassen zumeist eine mit dem Piezoaktor verbundene Endstufe zur Erzeugung eines Laststroms zum Laden und Entladen des Piezoaktors basierend auf einem der Endstufe eingegebenen Steuersignal. Im Hinblick auf die schaltungstechnische Realisierung einer solchen Endstufe sei lediglich beispielhaft auf die DE 199 44 733 A1, die DE 198 14 594 A1 EP 1312785, DE 10114421 und die DE 199 52 950 A1 verwiesen.

Ferner ist es bekannt, die Bereitstellung des Steuersignals für die Endstufe unter Verwendung eines Mikrocontrollers zu realisieren. Dies hat folgenden Hintergrund: Bei modernen Kraftfahrzeugen werden aus Gründen der Kosteneffizienz zumeist vielfältige Steuer- und/oder Überwachungsfunktionen für elektronische oder elektrische Komponenten des Fahrzeugs in einer oder mehreren, jeweils als "Steuergerät" bezeichneten elektronischen Baueinheit zusammengefasst. Die stetig gestiegenen Anforderungen hinsichtlich der Funktionalitäten solcher Steuergeräte haben dazu geführt, dass die gewünschten Funktionen heutzutage größtenteils durch Einsatz eines im Steuergerät enthaltenen Mikrocontrollers implementiert werden. Der Begriff "Mikrocontroller" bezeichnet hierbei z. B. eine elektronische programmgesteuerte Steuereinrichtung, die typischerweise wie ein PC eine CPU, einen RAM, einen ROM und I/O-Ports aufweist, im Gegensatz zu einem PC jedoch für eine sehr spezielle Anwendung ausgelegt ist. Alternativ kann ein Mikrocontroller auch durch eine festverdrahtete oder anwendungsspezifisch konfigurierbare elektronische Komponente (z. B. ASIC, FPGA etc.) implementiert sein.

Wenngleich der Einsatz eines Mikrocontrollers für den Betrieb der Einspritzanlage der Brennkraftmaschine somit zweckmäßig ist, so besteht dennoch die prinzipielle Problematik, dass die Einspritzventile einer Brennkraftmaschine eine sicherheitskritische Komponente darstellen, für die in der Praxis ein vom Mikrocontroller unabhängiger "Sicherheitspfad" vorhanden sein muss, über welchen jeder Piezoaktor in einen sicherheitsunkritischen Zustand gebracht werden kann. In der Regel ergibt sich ein solcher sicherheitsunkritischer Zustand durch eine Entladung des Piezoaktors.

Es ist eine Aufgabe der vorliegenden Erfindung, eine Vorrichtung der eingangs genannten Art besonders kostengünstig und dennoch betriebssicher zu realisieren.

Diese Aufgabe wird gelöst mit einer Vorrichtung nach Anspruch 1. Die abhängigen Ansprüche betreffen vorteilhafte Weiterbildungen der Erfindung.

Ein erster wesentlicher Aspekt der Erfindung ist die Verwendung eines Mikrocontrollers zur Ansteuerung der Endstufe, die wiederum den Laststrom zum Laden und Entladen des Piezoaktors erzeugt. Es ergeben sich daraus die bereits aus dem Stand der Technik bekannten Vorteile. Als Mikrocontroller kann hierbei insbesondere ein für vielerlei Zwecke geeigneter (universeller) "Mikrocontrollertyp" (Chip) eingesetzt werden.

Ein weiterer wesentlicher Aspekt der Erfindung besteht darin, dass der Mikrocontroller die Endstufe nicht direkt sondern über eine eigens hierfür vorgesehene integrierte Schaltung ansteuert. Mit dieser integrierten Schaltung ist es in kostengünstiger Weise möglich, die Ausgangssignale des Mikrocontrollers gewissermaßen an die eingangsseitigen Anforderungen der Endstufe anzupassen und/oder den Mikrocontroller zu entlasten. Bei der Erfindung stellt die integrierte Schaltung das der Endstufe einzugebende Steuersignal basierend auf einer vom Mikrocontroller bereitgestellten Ansteuervorgabe bereit. Die integrierte Schaltung ist bevorzugt als eine anwendungsspezifisch konfigurierte integrierte Schaltung (ASIC) ausgebildet.

Ein weiterer wesentlicher Aspekt der Erfindung besteht nun darin, eine in besonderer Weise ausgebildete und in besonderer Weise mit der integrierten Schaltung zusammenwirkende Entladeschaltung vorzusehen, die dazu dient, bei einem Ausfall der Endstufe und/oder des Mikrocontrollers den Piezoaktor zu entladen ("Sicherheitspfad"). Die Besonderheit dieser z. B. aus einer Fahrzeugbordspannung versorgten Entladeschaltung besteht zum einen darin, dass der bei dieser Entladung fließende Laststrom vorteilhaft von einem Regelkreis definiert wird, dessen Regler in der integrierten Schaltung enthalten und somit sehr kostengünstig und präzise arbeitend realisiert ist. Zum anderen besteht die Besonderheit der Entladeschaltung darin, dass die durch "Zwischenschaltung" der integrierten Schaltung zwischen dem Mikrocontroller und der Endstufe tendenziell erhöhte Ausfallwahrscheinlichkeit (nämlich durch einen Ausfall eben dieser integrierten Schaltung) durch der Entladeschaltung inhärente Mittel (Notentlademittel) berücksichtigt bzw. gehandhabt wird. Letzteres ist schaltungstechnisch gemäß der Erfindung besonders einfach realisiert, indem bei einer solchen Notentladung (nach einem Ausfall des Reglers bzw. der integrierten Schaltung) ein und dasselbe Stromstellglied zur Einstellung des Notentladestroms genutzt wird, welches auch bei ordnungsgemäß arbeitendem Regler von der Entladeschaltung nach einem Mikroprozessorausfall zur Entladestromeinstellung genutzt wird.

Eine vorteilhafte Anwendung der Erfindung ergibt sich z. B. für den Betrieb einer Speichereinspritzanlage ("Common-Rail").

Wenngleich die Erfindung grundsätzlich für Endstufen eines beliebigen Schaltungskonzepts geeignet ist, so gestattet die prinzipiell sehr leistungsfähig gestaltbare Kombination aus Mikrocontroller und integrierter Schaltung insbesondere die Bereitstellung von Steuersignalen für getaktete Endstufen. Der Begriff "getaktete Endstufe" bezeichnet hierbei ein Schaltungskonzept, bei welchem jeder Lade- bzw. Entladevorgang des Piezoaktors nicht durch einen kontinuierlich bereitgestellten Laststrom sondern durch Laststrompulse, eben getaktet, erfolgt.

In einer bevorzugten Ausführungsform ist vorgesehen, dass die integrierte Schaltung einen Teil eines DC/DC-Wandlers ausbildet, der an seinem Ausgang eine Versorgungsspannung der Endstufe bereitstellt. Diese Maßnahme ermöglicht eine weitere Kostenreduktion des Gesamtsystems, da eine Endstufe der hier interessierenden Art typischerweise Spannungen im Bereich von bis zu mehreren 100 V und kurzzeitig Lastströme zum Laden und Entladen des Piezoaktors von mehr als 10 A bereitstellen muss, wofür in einem Fahrzeug typischerweise eine Aufwärtswandlung der eher niedrigen Bordspannung (z. B. 12 V) in eine zur Versorgung der Endstufe brauchbare Spannung vorgesehen ist. Im Rahmen der Erfindung lassen sich zumindest einige Komponenten (insbesondere z. B. Regelungs- bzw. Stabilisierungskomponenten) eines solchen DC/DC-Wandlers praktisch ohne Mehraufwand in der integrierten Schaltung implementieren. So können dann z. B. lediglich noch Leistungsbauelemente wie eine Ausgangsstufe des DC/DC-Wandlers diskret aufgebaut sein.

In einer bevorzugten Ausführungsform ist vorgesehen, dass das Ausgangssignal des Reglers über ein passives Filter mit Hochpasscharakteristik zum Steuereingang des Stromstellglieds geführt ist. Dies besitzt dann den besonderen Vorteil, dass bei einem Ausfall des Reglers bzw. der integrierten Schaltung das passive Filter das fehlerhafte Reglerausgangssignal vom Steuereingang des Stromstellglieds fernhält. Dies jedenfalls dann, wenn es sich um ein entsprechend der Hochpasscharakteristik relativ niederfrequentes fehlerhaftes Signal handelt. Dies ist jedoch in der Praxis zumeist der Fall, z. B. bei einem Kurzschluss, der ein fehlerhaft konstantes Reglerausgangssignal bewirkt. Die mittels der Entladeschaltung bewerkstelligte Entladung des Piezoaktors kann auf Grund der dabei verwendeten Laststromregelung sehr rasch und dennoch mit einem kontrollierten, nicht übermäßig großen Laststrom erfolgen. Die Qualität der Laststromvorgabe hängt unter anderem von der Genauigkeit der Erfassung des Laststrom-Istwerts ab. In einer Ausführungsform ist vorgesehen, dass die Entladeschaltung eine in Reihenschaltung zu dem Stromstellglied angeordnete Strommesswiderstandseinrichtung aufweist, an welcher der Laststrom-Istwert als ein Spannungsabfall abgreifbar ist. Damit lässt sich der Laststrom-Istwert in besonders einfacher Weise ermitteln.

In der Praxis ergibt sich bei der Ermittlung des Laststrom-Istwerts als Spannungsabfall an einem Strommesswiderstand das Problem, dass bei einem zweckmäßigerweise (wegen niedriger Verlustleistung) möglichst gering gewählten Widerstandswert auch der Spannungsabfall entsprechend klein und somit tendenziell ungenau messbar wird. Letztere Ungenauigkeit ist umso gravierender, je kleiner der tatsächlich fließende Laststrom ist. Daher ist bei Verwendung eines einzigen Strommesswiderstands mit einer großen Messungenauigkeit am Ende des Entladevorgangs zu rechnen. Insbesondere um dieses Problem zu beseitigen, ist in einer Weiterbildung vorgesehen, dass die Strommesswiderstandseinrichtung mehrere in Reihenschaltung zueinander angeordnete Strommesswiderstände aufweist und wenigstens einem dieser Widerstände eine in Durchlassrichtung gepolte Diode parallelgeschaltet ist. Damit lässt sich eine hohe Strommessgenauigkeit über einen größeren Bereich von Lastströmen gewährleisten. Beispielsweise kann einer der Strommesswiderstände einen vergleichsweise kleinen Widerstandswert besitzen, so dass bei einem großen Laststrom, wie er z. B. zu Beginn des Entladens fließt, ein für die Messung gut brauchbarer Spannungsabfall entsteht. Ein anderer Strommesswiderstand kann einen demgegenüber wesentlich größeren Widerstandswert besitzen, so dass die daran abfallende Messspannung für kleine Lastströme, wie sie etwa am Ende des Entladevorgangs fließen, noch gut messbar ist. Eine dem Widerstand mit größerem Widerstandswert parallelgeschaltete Diode kann bei großem Laststrom die Verluste verkleinern.

Auch für die durch die Notentlademittel bewerkstelligte Entladung des Piezoaktors ist ein vorgegebener Laststromverlauf von Vorteil. In einer Ausführungsform ist z. B. vorgesehen, dass die Notentlademittel zur Entladung des Piezoaktors mit einem Konstantstrom ausgebildet sind.

Um mit den Notentlademitteln einen vorgegebenen Laststromverlauf, insbesondere z. B. einen konstanten Laststrom vorzusehen, kann wieder eine Regelung des Laststroms vorgesehen sein. In einer diesbezüglich bevorzugten Ausführungsform ist vorgesehen, dass die Notentlademittel einen Regelkreis bilden, welcher den Notentladestrom unter Verwendung des Stromstellglieds und der Strommesswiderstandseinrichtung regelt. Damit ergibt sich der Vorteil einer Doppelnutzung sowohl des Stromstellglieds als auch der Strommesswiderstandseinrichtung, nämlich sowohl bei der durch die Entladeschaltung normalerweise (bei funktionierendem Regler) vorgesehenen Entladung als auch bei der Notentladung (nach einem Ausfall des in der integrierten Schaltung enthaltenen Reglers).

Eine besonders zuverlässige Notentladung lässt sich beispielsweise dadurch gewährleisten, dass die Notentlademittel eine Stromquelle zur Beaufschlagung des Steuereingangs des Stromstellglieds mit einem Konstantstrom sowie eine Stromsenke zum Ableiten eines Stroms von dem Steuereingang des Stromstellglieds umfassen, deren Stromableitvermögen gesteuert wird. Die zur Beaufschlagung des Steuereingangs des Stromstellglieds verwendete Konstantstromquelle (z. B. realisiert durch eine Transistoranordnung) kann beispielsweise durch ein Steuersignal aktiviert werden, welches den Ausfall des in der integrierten Schaltung enthaltenen Reglers bzw. der integrierten Schaltung insgesamt anzeigt. Die so ausgebildeten Notentlademittel können die oben erwähnte Notentladestromregelung vorsehen, indem das Stromableitvermögen der Stromsenke vom gemessenen Laststrom-Istwert abhängig gesteuert wird.

In einer Ausführungsform ist vorgesehen, dass zumindest ein Großteil der Entladeschaltung aus diskreten elektronischen Bauelementen aufgebaut ist. Als Stromstellglied eignet sich z. B. ein Leistungstransistor, dessen Basis bzw. Gate dann den Steuereingang darstellt. Das gegebenenfalls zwischen dem Regler der integrierten Schaltung und dem Steuereingang vorgesehene passive Filter kann im einfachsten Fall eine Parallelschaltung aus einem Kondensator und einem Widerstand umfassen oder aus einer solchen bestehen.

In einer bevorzugten Ausführungsform umfasst die Vorrichtung ferner einen als "Sicherheitsprozessor" dienenden weiteren Mikrocontroller, der keine nennenswerten Steuerungsaufgaben im Normalbetrieb übernimmt sondern im Wesentlichen lediglich den Normalbetrieb überwacht und bei Entdeckung von Fehlfunktionen geeignete Sicherheitsmaßnahmen trifft.

Ein solcher Sicherheitsprozessor kann beispielsweise zur Überwachung des ordnungsgemäßen Betriebs des Mikrocontrollers und/oder der integrierten Schaltung und/oder der Endstufe verwendet werden, um bei Feststellung von Fehlern entsprechende Fehlersignale auszugeben, beispielsweise ein Fehlersignal, welches den Ausfall der Endstufe und/oder des Mikrocontrollers anzeigt und der Entladeschaltung eingegeben wird, um den damit durchgeführten Entladevorgang einzuleiten. Ferner kann der Sicherheitsprozessor ein den Ausfall des in der integrierten Schaltung enthaltenen Reglers anzeigendes Fehlersignal an die Notentlademittel (für deren Aktivierung) ausgeben.

Die Erfindung wird nachfolgend anhand eines Ausführungsbeispiels mit Bezug auf die beigefügte Zeichnung näher beschrieben. Es stellt dar:

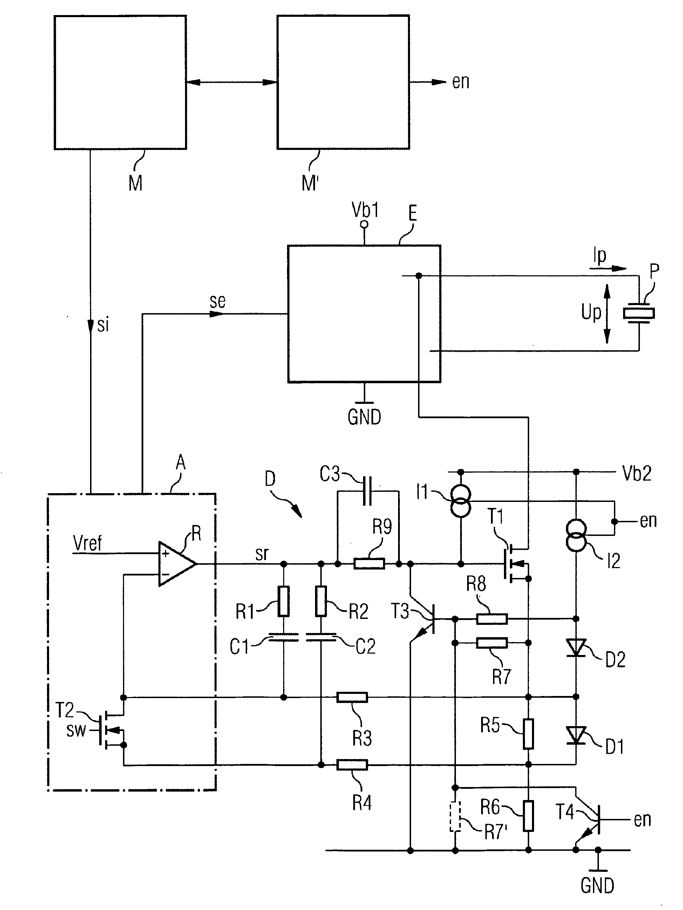

- Fig. 1: ist ein Blockschaltbild einer Vorrichtung zum Laden und Entladen wenigstens eines Piezoaktors.

Fig. 1 zeigt zum Verständnis der vorliegenden Erfindung wesentliche Komponenten einer Schaltungsanordnung, die in einem so genannten Steuergerät eines Kraftfahrzeugs enthalten ist und unter anderem zur Ansteuerung einer Mehrzahl von Piezoaktoren einer Kraftstoffeinspritzanlage dient.

Der Einfachheit der Darstellung halber ist in der Figur lediglich einer der Piezoaktoren dargestellt und mit P bezeichnet, die im Betrieb der Brennkraftmaschine jeweils in Einspritzintervallen durch Anlegen einer geeigneten Ansteuerspannung Up bzw. Beaufschlagen mit einem Ansteuerstrom Ip (Laststrom) von einer hierzu vorgesehenen Endstufe E betrieben werden.

Die Endstufe E ist zu deren Versorgung einerseits mit einer elektrischen Fahrzeugmasse GND (0 V) und andererseits mit einem ersten Versorgungspotenzial Vb1 (z. B. +200 V) verbunden und erzeugt den Laststrom Ip zum Laden und Entladen des Piezoaktors P basierend auf einem der Endstufe E eingegebenen Steuersignal se.

Bei der Endstufe E handelt es sich um eine getaktet betriebene Endstufe, die vor jedem Ladevorgang bzw. Entladevorgang einen der mehreren Piezoaktoren mittels eines für jeden Piezoaktor vorgesehenen Auswahlschalters auswählt und dann durch eine Folge von kurzen Laststrompulsen auflädt bzw. entlädt.

Das Steuersignal se wir hierbei von einer als ASIC (anwendungsspezifisch konfigurierte integrierte Schaltung) A basierend auf einer dieser integrierten Schaltung A eingegebenen Ansteuervorgabe si bereitgestellt.

Die Ansteuervorgabe si wird von einem Mikrocontroller M softwaregesteuert an einem I/O-Port desselben bereitgestellt.

Der Mikrocontroller M des Steuergeräts erfüllt noch eine Vielzahl weiterer, hier nicht interessierender Aufgaben bezüglich der Ansteuerung von elektrischen bzw. elektronischen Fahrzeugkomponenten. Ein mit dem Mikrocontroller in Kommunikationsverbindung stehender zweiter Mikrocontroller bzw. "Sicherheitsprozessor" M' überwacht den ordnungsgemäßen Betrieb des Mikrocontrollers M sowie alle weiteren in Fig. 1 dargestellten Komponenten der Vorrichtung.

In an sich bekannter Weise wird durch die im Mikrocontroller M ablaufende Software eine Einspritzmengenregelung basierend auf diversen erfassten, insbesondere gemessenen oder berechneten Parametern (Fahrerwunsch, Motorbetriebsparameter etc.) durchgeführt.

Die integrierte Schaltung A bildet gewissermaßen ein kostengünstig zu realisierendes Zwischenglied zwischen dem Mikrocontroller-Chip M eines herkömmlichen, kommerziell erhältlichen Typs und der betreffenden Endstufe E. In der Praxis kann somit ein und derselbe Mikrocontrollertyp für verschiedene Ausführungen der Brennkraftmaschine bzw. Ausführungen der Einspritzanlage eingesetzt werden.

Ferner erkennt man in der Figur eine mit dem Piezoaktor P sowie der integrierten Schaltung A verbundene, größtenteils diskret aufgebaute Entladeschaltung D, die dazu dient, bei einem Ausfall der Endstufe E und/oder des Mikrocontrollers M dennoch eine Entladung des Piezoaktors P zu ermöglichen. Diese Funktion wird in der Praxis oftmals als "Sicherheitspfad" bezeichnet, da das piezobetätigte Einspritzventil eine sicherheitskritische Komponente des Fahrzeugs darstellt, die in einem Fehlerfall in einen sicherheitsunkritischen Zustand gebracht werden muss.

Die Entladeschaltung D umfasst einen Stromstelltransistor T1 ("protection switch") zum Einstellen eines bei dieser Sicherheitsentladung fließenden Laststroms Ip. Der Stromstelltransistor T1 ist hier als FET ausgebildet, von welchem ein Kanalanschluss mit einem spannungsführenden Anschluss ("hot side") des Piezoaktors P verbunden ist, wohingegen der andere Kanalanschluss über eine Strommesswiderstandseinrichtung R5, R6 mit der elektrischen Fahrzeugmasse GND verbunden ist. Die Strommesseinrichtung besteht im dargestellten Ausführungsbeispiel aus einer Reihenschaltung von zwei Strommesswiderständen R5 und R6, an denen jeweils eine Spannung abfällt, die proportional zu dem während der Sicherheitsentladung fließenden Laststrom Ip ist. Für den Widerstand R5 gilt dies jedoch nur eingeschränkt, da diesem Widerstand eine in Durchlassrichtung gepolte Diode D1 parallelgeschaltet ist. Bei größeren Lastströmen Ip übernimmt diese Diode D1 somit einen zunehmend größeren Anteil des durch die Parallelschaltung R5, D1 fließenden Stroms. Dies verringert vorteilhaft die elektrische Verlustleistung bei höheren Lastströmen.

Mittels der Entladeschaltung D wird ein geregelter Laststromverlauf realisiert. Ein in der integrierten Schaltung A enthaltener Regler R (hier: Operationsverstärker mit externer Gegenkopplung bzw. Kompensation durch Widerstände R1, R2 und Kondensatoren C1 und C2) vergleicht hierzu einen Istwert des Laststroms Ip mit einem Sollwert dieses Laststroms Ip und stellt an seinem Ausgang ein für die Abweichung zwischen Istwert und Sollwert charakteristisches Regelabweichungssignal sr bereit. Um den Regelkreis zu schließen, wird dieses Regelabweichungssignal sr über ein passives Filter mit Hochpasscharakteristik, nämlich eine Parallelschaltung aus einem Widerstand R9 und einem Kondensator C3 zum Gate des Stromstelltransistors T1 geführt.

Die Führungsgröße dieses Regelkreises, welche den gewünschten Entladestromverlauf bei der Sicherheitsentladung definiert, wird hierbei als ein Referenzpotenzial Vref von der integrierten Schaltung A erzeugt und dem nicht-invertierenden Eingang des Reglers R zugeführt.

Eine weitere Besonderheit des dargestellten Regelkreises besteht darin, dass das dem invertierenden Eingang des Reglers R zugeführte Rückkopplungssignal in zwei verschiedenen Rückkopplungsmodi erzeugt werden kann, zwischen denen an einer Stelle im zeitlichen Verlauf der Entladung umgeschaltet wird. Ein für diese Umschaltung vorgesehener Transistor T2 wird hierfür mit einem ebenfalls von der integrierten Schaltung A erzeugten Umschaltsignal sw an seinem Gate beaufschlagt.

Zu Beginn der Entladung ist das Umschaltsignal sw so gewählt, dass der Umschalttransistor T2 leitet. In dieser ersten Phase wird das sich als gewichtete Summe der Spannungsabfälle über den Strommesspfaden R5, D1 und R6 darstellende Strommesssignal über ein Rückkoppelnetzwerk R1, R2, C1, C2, R3, R4 zum Regler R geführt. In einer zweiten, durch Umstellung des Signals sw initiierten Phase (T2 sperrend) wird dann der über R4 laufende Rückkopplungspfad deaktiviert. Der Rückkoppelwiderstand R4 ist in seinem Widerstandswert wesentlich kleiner bemessen als der Rückkoppelwiderstand R3. Der in der zweiten Phase (zum Ende des Entladevorgangs hin) fließende Laststrom Ip ist vergleichsweise gering.

Die Integration des Reglers R für den Leistungssteller T1 in die integrierte Schaltung A ist sowohl aus Kostengründen als auch aus Gründen der Genauigkeit und Stabilität der Entladestromregelung sehr vorteilhaft. Abweichend vom dargestellten Ausführungsbeispiel ist es prinzipiell denkbar, noch weitere Komponenten der dargestellten Entladeschaltung D nicht diskret sondern innerhalb der integrierten Schaltung A zu implementieren.

Die an sich sehr vorteilhafte Anordnung der integrierten Schaltung A mit einer Doppelfunktion, nämlich einerseits zur Entlastung des Mikrocontrollers M und zur Adaption desselben an die betreffende Endstufe E und andererseits zur Ausbildung eines Teils der für die Sicherheitsentladung geforderten Entladeschaltung D, besitzt jedoch auch einen von der Anmelderin erkannten prinzipiellen Nachteil, nämlich die Vergrößerung der Gefahr eines Ausfalls der Sicherheitsentladung auf Grund des Einsatzes der integrierten Schaltung A. Wenn nämlich im Bereich dieser integrierten Schaltung A eine die beschriebenen Regelungskomponenten beeinträchtigende Funktionsstörung auftritt (insbesondere z. B. der Regler R ausfällt), so kann am Ausgang des Reglers R ein fehlerhaftes Regelabweichungssignal sr erzeugt werden. Dieses Problem ist jedoch durch die nachfolgend beschriebene weitere Besonderheit der Entladeschaltung D vorteilhaft beseitigt.

Das Ausgangssignal sr des Reglers R wird relativ hochohmig (über R9) dem Gate des Stromstelltransistors T1 zugeführt. Damit ist der Gleichspannungspfad vom Ausgang des Reglers R zum Transistor T1 weitgehend unterbrochen, so dass in nachfolgend beschriebener Weise derselbe Transistor T1 auch bei einer eventuell fehlerhaften Reaktion des Reglers R bzw. der integrierten Schaltung A dennoch für eine "Notentladung" nutzbar bleibt. Der dem Übertragungswiderstand R9 parallel geschaltete Kondensator C3 sorgt für eine normale Übertragungsfunktion im üblichen Frequenzbereich, wohingegen R9 für eine Spannung von im Mittel Null über C3 sorgt.

Zur Beseitigung der mit einem Ausfall des Reglers R verbundenen Problematik weist die Entladeschaltung D Notentlademittel auf, um das Gate des Stromstelltransistors T1 für eine Notentladung des Piezoaktors P zu beaufschlagen.

Die Notentlademittel sind durch folgende Komponenten gebildet: Erste Anschlüsse von zwei durch ein Notentladeerlaubnissignal en aktivierbaren Stromquellen I1 und I2 sind mit einem positiven Versorgungspotenzial Vb2 (z. B. 12 V) der Entladeschaltung D verbunden. Der andere Anschluss der ersten Stromquelle I1 ist mit dem Gate des Stromstelltransistors T1 verbunden. Der andere Anschluss der zweiten Stromquelle I2 ist einerseits über einen Widerstand R8 mit der Basis eines Transistors T3 und andererseits mit der Anode einer Diode D2 verbunden. Der Kollektor des Transistors T3 ist mit dem Gate des Stromstelltransistors T1 verbunden und der Emitter des Transistors T3 ist mit der elektrischen Masse GND verbunden. Die Kathode der Diode D2 ist einerseits mit einem Schaltungsknoten zwischen dem Transistor T1 und der Strommesseinrichtung R5, R6 und andererseits mit der Anode der Diode D1 verbunden. Die Kathode der Diode D1 ist mit einem Schaltungsknoten zwischen den beiden Strommesswiderständen R5 und R6 verbunden. Ein Widerstand R7 ist einerseits mit der Basis des Transistors T3 und andererseits mit einem Schaltungsknoten zwischen dem Stromstelltransistor T1 und der Strommesseinrichtung R5, R6 verbunden. Die Basis des Transistors T3 ist ferner mit dem Kollektor eines Transistors T4 verbunden, dessen Emitter mit der elektrischen Masse GND verbunden ist und dessen Basis wie die Stromquellen I1, I2 mit dem Notentladeerlaubnissignal en beaufschlagt wird.

Die Funktion der Notentlademittel ist wie folgt: Im Normalbetrieb, wenn die integrierte Schaltung A und insbesondere deren Regler R ordnungsgemäß arbeitet, ist T4 leitend, so dass T3 sicher sperrt und die mittels des Reglers R durchgeführte Regelung im Wesentlichen nicht beeinflusst ist. Wenn jedoch ein Ausfall des Reglers R bzw. der integrierten Schaltung A detektiert wird, was im dargestellten Ausführungsbeispiel durch den Sicherheitsprozessor M' erfolgt, so wird das diesen Fehlerfall signalisierende Signal en an die Steuereingänge der Stromquellen I1 und I2 sowie an die Basis des Transistors T4 gegeben, der damit in den sperrenden Zustand gebracht wird. Das Ausgangssignal des Reglers R hat auf Grund der Zwischenschaltung des Hochpassfilters C3, R9 praktisch keinen Einfluss auf den Stromstelltransistor T1. Das Gate dieses Transistors T1 wird jedoch durch den von der Stromquelle I1 bereitgestellten Strom derart in seinem Potenzial verschoben, dass T1 beginnt zu leiten. Damit fließt ein Notentladestrom vom Piezoaktor P über den Stromstelltransistor T1 und die Strommesswiderstände R5 und R6 zur Masse GND. Dieser Entladestrom wird jedoch vorteilhaft begrenzt, genauer gesagt geregelt, indem die an der Strommesseinrichtung R5, R6 abfallende Spannung über den Widerstand R7 und die Reihenschaltung aus D2 und R8 auf die Basis des Transistors T3 einwirkt und demzufolge ein gewisser Anteil des dem Gate von T1 zugeführten Stroms über den Transistor T3 wieder zur Masse GND abgeleitet wird. Die dargestellte Schaltungsanordnung bewirkt die Einstellung eines vorgegebenen, konstanten Notentladestroms. Die in diesem Fall aktivierte Stromquelle I2 bewirkt in Verbindung mit der Diode D2 hierbei vorteilhaft eine Aufwärtsverschiebung des an der Strommesseinrichtung R5, R6 durch den Entladestrom bewirkten Potenzials. Dieses um den Spannungsabfall an D2 erhöhte Potenzial wird über den Widerstand R8 zur Basis des Transistors T3 geführt, der damit zuverlässig im Rahmen der Notentladestromregelung angesteuert werden kann. Dies gilt insbesondere für eine über R5, R6 abfallende Spannung, bei der die Diode D1 noch nicht leitet. Im Gleichgewichtsfall wird durch den Transistor T3 gerade so viel Strom vom Gate des Stromstelltransistors T1 abgezogen wie durch die Stromquelle I1 zugeführt wird.

Der durch die Notentlademittel geschaffene, der Entladeschaltung inhärente zusätzliche Sicherheitspfad macht die Verwendung von Sicherheitsentladeregelungskomponenten (hier: Regler R) innerhalb der integrierten Schaltung A besonders betriebssicher.

Für diesen zusätzlichen "Notsicherheitspfad" werden beim dargestellten Ausführungsbeispiel vorteilhaft Komponenten der ohnehin für die im Normalbetrieb vorgesehene Sicherheitsentladung mitgenutzt (Stromstelltransistor T1 und Strommesseinrichtung R5, R6).

Selbstverständlich kann die dargestellte Schaltungsanordnung unter Beibehaltung der besonderen Vorteile modifiziert werden. Abweichend vom dargestellten Ausführungsbeispiel ist es z. B. möglich, den mit der Basis des Transistors T3 verbundenen Widerstand R7 zur Masse GND hin zu führen, wie dies in der Figur bei R7' eingezeichnet ist.

## Patentansprüche

1. Vorrichtung zum Laden und Entladen wenigstens eines Piezoaktors (P) für ein Einspritzventil einer Brennkraftmaschine, umfassend
- eine mit dem Piezoaktor (P) verbundene Endstufe (E) zur Erzeugung eines Laststroms (Ip) zum Laden und Entladen des Piezoaktors (P) basierend auf einem der Endstufe (E) eingegebenen Steuersignal (se),
- eine mit der Endstufe (E) verbundene integrierte Schaltung (A) zur Bereitstellung des Steuersignals (se) basierend auf einer der integrierten Schaltung (A) eingegebenen Ansteuervorgabe (si),
- einen mit der integrierten Schaltung (A) verbundenen Mikrocontroller (M) zur Bereitstellung der Ansteuervorgabe (si),
- eine mit dem Piezoaktor (P) sowie der integrierten Schaltung (A) verbundene Entladeschaltung (D) zum Entladen des Piezoaktors (P) bei einem Ausfall der Endstufe (E) und/oder des Mikrocontrollers (M), wobei die Entladeschaltung (D) zum Einstellen eines bei dieser Entladung fließenden Laststroms (Ip) ein Stromstellglied (T1) aufweist, von welchem ein Steuereingang von einem Ausgangssignal (sr) eines in der integrierten Schaltung (A) enthaltenen Reglers (R) beaufschlagt wird, der einen Laststrom-Istwert mit einem Laststrom-Sollwert vergleicht und ein Regelabweichungssignal als das Ausgangssignal (sr) bereitstellt, und wobei die Entladeschaltung (D) bei einem Ausfall des Reglers (R) aktivierbare Notentlademittel (T3, T4, R7, R8, D2, I1, I2, M')aufweist, um den Steuereingang des Stromstellglieds (T1) für eine Notentladung des Piezoaktors (P) zu beaufschlagen.

2. Vorrichtung nach Anspruch 1, wobei die integrierte Schaltung (A) einen Teil eines DC/DC-Wandlers ausbildet, der an seinem Ausgang eine Versorgungsspannung (Vb1) der Endstufe (E) bereitstellt.

3. Vorrichtung nach einem der vorangehenden Ansprüche, wobei das Ausgangssignal (sr) des Reglers (R) über ein passives Filter mit Hochpasscharakteristik zum Steuereingang des Stromstellglieds (T1) geführt ist.

4. Vorrichtung nach einem der vorangehenden Ansprüche, wobei die Entladeschaltung (D) eine in Reihenschaltung zu dem Stromstellglied (T1) angeordnete Strommesswiderstandseinrichtung (R5, R6, D1) aufweist, an welcher der Laststrom-Istwert als ein Spannungsabfall abgreifbar ist.

5. Vorrichtung nach Anspruch 4, wobei die Strommesswiderstandseinrichtung (R5, R6, D1) mehrere in Reihenschaltung zueinander angeordnete Strommesswiderstände (R5, R6) aufweist.

6. Vorrichtung nach einem der vorangehenden Ansprüche, wobei die Notentlademittel (T3, T4, R7, R8, D2, I1, I2, M') zur Entladung des Piezoaktors (P) mit einem Konstantstrom ausgebildet sind.

7. Vorrichtung nach einem der vorangehenden Ansprüche, wobei die Notentlademittel (T3, T4, R7, R8, D2, I1, I2, M') einen Regelkreis bilden, welcher den Notentladestrom unter Verwendung des Stromstellglieds (T1) und der Strommesswiderstandseinrichtung (R5, R6, D1) regelt.

8. Vorrichtung nach einem der vorangehenden Ansprüche, wobei die Notentlademittel (T3, T4, R7, R8, D2, I1, I2, M') eine Stromquelle (I1) zur Beaufschlagung des Steuereingangs des Stromstellglieds (T1) mit einem Konstantstrom sowie eine Stromsenke (T3, GND) zum Ableiten eines Stroms von dem Steuereingang des Stromstellglieds (T1) umfassen, deren Stromableitvermögen gesteuert wird.

## Claims

1. Device for charging and discharging at least one piezo-actuator (P) for an injection valve in an internal combustion engine, comprising:
- an output stage (E) connected to the piezo-actuator (P) for generating a load current (Ip) for charging and discharging the piezo-actuator (P) as a function of a control signal (se) input to the output stage (E),
- an integrated circuit (A) connected to the output stage (E) for providing the control signal (se) as a function of an actuation signal (si) input to the integrated circuit (A),
- a microcontroller (M) connected to the integrated circuit (A) for providing the actuation signal (si),
- a discharge circuit (D) connected to the piezo-actuator (P) as well as to the integrated circuit (A) for discharging the piezo-actuator (P) in the event of a failure of the output stage (E) and/or of the microcontroller (M), wherein for setting a load current (Ip) which flows during said discharge the discharge circuit (D) has a current setting element (T1), to a control input of which an output signal (sr) of a control loop (R) contained in the integrated circuit (A) is applied, said control loop (R) comparing a load current actual value with a load current setpoint value and a control error signal being provided as the output signal (sr), and wherein the discharge circuit (D) has activatable emergency discharge facilities (T3, T4, R7, R8, D2, I1, 12, M') in the event of a failure of the control loop (R), for application to the control input of the current setting element (T1) for an emergency discharge of the piezo-actuator (P).

2. Device according to claim 1, wherein the integrated circuit (A) forms part of a DC/DC converter which provides a supply voltage (Vb1) for the output stage (E) at its output.

3. Device according to one of the preceding claims, wherein the output signal (sr) of the control loop (R) is fed through a passive filter with high-pass characteristics to the control input of the current setting element (T1).

4. Device according to one of the preceding claims, wherein the discharge circuit (D) has a current measurement shunt (R5, R6, D1) connected in series to the current setting element (T1), at which the load current actual value can be tapped as a voltage drop.

5. Device according to claim 4, wherein the current measurement shunt (R5, R6, D1) has a plurality of resistors (R5, R6) connected to one another in series.

6. Device according to one of the preceding claims, wherein the emergency discharge facilities (T3, T4, R7, R8, D2, I1, 12, M') are configured to discharge the piezo-actuator (P) with a constant current.

7. Device according to one of the preceding claims, wherein the emergency discharge facilities (T3, T4, R7, R8, D2, I1, 12, M') form a control loop which regulates the emergency discharge current using the current setting element (T1) and the current measurement shunt (R5, R6, D1).

8. Device according to one of the preceding claims, wherein the emergency discharge facilities (T3, T4, R7, R8, D2, I1, 12, M') include a current source (I1) for applying a constant current to the control input of the current setting element (T1) as well as a current sink (T3, GND) for diverting a current from the control input of the current setting element (T1), the current diversion capacity of said current sink (T3, GND) being controlled.

## Revendications

1. Dispositif pour charger et décharger au moins un actionneur piézoélectrique (P) pour une soupape d'injection d'un moteur à combustion interne comprenant
- un étage de sortie (E) relié à l'actionneur piézoélectrique (P) pour générer un courant de charge (Ip) pour le chargement et le déchargement de l'actionneur piézoélectrique (P) sur la base d'un signal de commande (se) donné à l'étage de sortie (E),
- un circuit (A) intégré et relié à l'étage de sortie (E) pour la mise à disposition du signal de commande (se) sur la base d'une instruction d'amorçage (si) donnée au circuit intégré (A),
- un microcontrôleur (M) relié au circuit intégré (A) pour la mise à disposition de l'instruction d'amorçage (si),
- un circuit de décharge (D) relié à l'actionneur piézoélectrique (P) ainsi qu'au circuit intégré (A) pour le déchargement de l'actionneur piézoélectrique (P) dans le cas d'une défaillance de l'étage de sortie (E) et/ou du microcontrôleur (M), dans lequel le circuit de décharge (D) présente un composant de réglage de courant (T1) pour le réglage d'un courant de charge (Ip) circulant lors de cette décharge, à partir duquel une entrée de commande est alimentée par un signal de sortie (sr) d'un régulateur (R) inclus dans le circuit intégré (A), lequel régulateur compare une valeur réelle de courant de charge avec une valeur de consigne de courant de charge et met à disposition un signal de déviation en tant que signal de sortie (sr), et dans lequel le circuit de décharge (D) présente des moyens de décharge d'urgence (T3, T4, R7, R8, D2, I1, 12, M') activables lors d'une défaillance du régulateur (R), afin d'alimenter l'entrée de commande du composant de réglage de courant (T1) pour une décharge d'urgence de l'actionneur piézoélectrique (P).

2. Dispositif selon la revendication 1, dans lequel le circuit intégré (A) forme une partie du convertisseur DC/DC qui, sur sa sortie, met une tension d'alimentation (Vb1) à disposition de l'étage de sortie (E).

3. Dispositif selon l'une des revendications précédentes, dans lequel le signal de sortie (sr) du régulateur (R) est guidé via un filtre passif avec caractéristique passe-haut vers l'entrée de commande du composant de réglage de courant (T1).

4. Dispositif selon l'une des revendications précédentes, dans lequel le circuit de décharge (D) présente un dispositif de résistance de mesure de courant (R5, R6, D1) agencé dans un montage en série avec le composant de réglage de courant (T1), sur lequel la valeur réelle du courant de charge peut être prélevée en tant que chute de tension.

5. Dispositif selon la revendication 4, dans lequel le dispositif de résistance de mesure de courant (R5, R6, D1) présente plusieurs résistances de mesure de courant (R5, R6) agencées les unes par rapport aux autres dans un montage en série.

6. Dispositif selon l'une des revendications précédentes, dans lequel les moyens de décharge d'urgence (T3, T4, R7, R8, D2, I1, 12, M') sont conçus pour la décharge de l'actionneur piézoélectrique (P) avec un courant constant.

7. Dispositif selon l'une des revendications précédentes, dans lequel les moyens de décharge d'urgence (T3, T4, R7, R8, D2, I1, 12, M') forment un circuit de réglage qui règle le courant de décharge d'urgence en utilisant le composant de réglage de courant (T1) et le dispositif de résistance de mesure de courant (R5, R6, D1).

8. Dispositif selon l'une des revendications précédentes, dans lequel les moyens de décharge d'urgence (T3, T4, R7, R8, D2, I1, 12, M') comprennent une source de courant (I1) pour l'alimentation de l'entrée de commande du composant de réglage de courant (T1) avec un courant constant ainsi qu'un récepteur de courant (T3, GND) pour la dérivation d'un courant à partir de l'entrée de commande du composant de réglage de courant (T1), source dont la capacité de dérivation de courant est commandée.
